# EUROPÄISCHE PATENTSCHRIFT

(11) **EP 4 022 202 B1**
(45) Veröffentlichungstag und Bekanntmachung des Hinweises auf die Patenterteilung: **19.11.2025**
(21) Anmeldenummer: 20792531.4
(22) Anmeldetag: 27.08.2020
(51) Int. Cl.: F16J 15/26, F16J 15/00, F16J 15/3296

(54) **VERFAHREN UND VORRICHTUNG ZUR ZUSTANDSÜBERWACHUNG EINES KOLBENSTANGENDICHTSYSTEMS EINES KOLBENKOMPRESSORS**
METHOD AND DEVICE FOR TESTING THE CONDITION OF A PRESSURE PACKAGE OF A PISTON COMPRESSOR
PROCÉDÉ ET DISPOSITIF DE SURVEILLANCE D'ÉTAT D'UNE GARNITURE HAUTE PRESSION D'UN COMPRESSEUR À PISTON

(30) Priorität: 27.08.2019 EP 19193952
(43) Veröffentlichungstag der Anmeldung: 06.07.2022
(73) Patentinhaber: Burckhardt Compression AG, 8404 Winterthur (CH)
(72) Erfinder: FEISTEL, Norbert, 8548 Ellikon a.d. Thur - Zürich (CH)
(74) Vertreter: Hepp Wenger Ryffel AG
(86) Internationale Anmeldenummer: PCT/EP2020/074038
(87) Internationale Veröffentlichungsnummer: WO 2021/038016

(56) Entgegenhaltungen:
- DE-U1- 202014 102 844
- US-A- 5 412 977
- US-A1- 2015 076 768

## Beschreibung

Die Erfindung betrifft ein Verfahren sowie eine Vorrichtung zur Zustandsüberwachung eines Kolbenstangendichtsystems eines Kolbenkompressors.

### Stand der Technik

Das Dokument DE202014102844U1 offenbart eine Kolbenstangenpackung für einen Kolbenkompressor. Solche Kolbenstangendichtsysteme werden beispielsweise verwendet, um den Kompressionsraum eines Kolbenkompressors gegenüber dem Umgebungsdruck abzudichten. Eine hin und her bewegliche Kolbenstange ist einerseits mit einem Antrieb und andererseits mit einem Kolben des Kolbenkompressors verbunden. Die Kolbenstange verläuft durch das Kolbenstangendichtsystem hindurch, sodass innerhalb des Kolbenstangendichtsystems der Druck zwischen dem Kompressionsraum und der Umgebung abgebaut wird. Um für das Kolbenstangendichtsystem eine hohe Dichtwirkung bzw. eine geringe Leckage zu erzielen umfasst eine derartige Druck Packung vorzugsweise reibende Dichtelemente, deren Dichtflächen an der Kolbenstange anliegen und deshalb einen Verschleiss erfahren. Derartige Kolbenstangendichtsysteme weisen den Nachteil auf, dass deren Leckage abhängig von der Laufzeit zunimmt. Betreiber von derartigen Kolbenkompressor fordern während einer langen Laufzeit von beispielsweise ununterbrochen zumindest 8000 Stunden einen sicheren Betrieb, ohne dass die Leckage in dem Kolbenstangendichtsystem einen unzulässig hohen Wert aufweist, bzw. ohne dass die Dichtelemente einen hohen Verschleiss, einen Bruch oder sogar eine elastisch plastische Deformation aufweisen.

### Darstellung der Erfindung

Aufgabe der Erfindung ist es ein Verfahren sowie eine Vorrichtung auszubilden, welche einen zuverlässigeren Betrieb eines Kolbenkompressors erlauben.

Diese Aufgabe wird gelöst mit einem Verfahren umfassend die Merkmale von Anspruch 1. Die Ansprüche 2 bis 10 betreffen weitere, vorteilhafte Verfahrensschritte. Die Aufgabe wird weiter gelöst mit einem Überwachungssystem aufweisend die Merkmale von Anspruch 11. Die Ansprüche 12 bis 14 betreffen weitere vorteilhafte ausgestaltete Vorrichtungen.

Die Aufgabe wird insbesondere gelöst mit einem Verfahren zur Zustandsüberwachung eines Kolbenstangendichtsystems eines Kolbenkompressors umfassend einen Kompressionsraum, wobei im Kompressionsraum des Kolbenkompressors ein Gas von einem Saugdruck auf einen Enddruck verdichtet wird, wobei das Kolbenstangendichtsystem zumindest zwei in einer Längsrichtung nacheinander folgend angeordnete Kammerringe mit zumindest je einem darin angeordneten Dichtelement umfasst, wobei eine durch die Dichtelemente sowie die Kammerringe verlaufende Kolbenstange in Längsrichtung hin und her bewegt und durch die Dichtelemente abgedichtet wird, wobei das Kolbenstangendichtsystem eine Eintrittsseite und eine Austrittsseite aufweist, wobei an der Eintrittsseite der Druck des Kompressionsraums anliegt, und wobei zwischen Eintrittsseite und Austrittsseite ein Differenzdruck auftritt, wobei der auftretende Differenzdruck eine statische Druckkomponente und eine dynamische Druckkomponente aufweist, wobei die dynamische Druckkomponente in Abhängigkeit des Kurbelwinkels verändert wird, wobei sich ein Leckgas in den Kammerringen befindet, wobei in dem Kolbenstangendichtsystem zumindest die dynamische Druckkomponente des Leckgases gemessen wird, und wobei aus einer Veränderung der dynamischen Druckkomponente in Funktion der Zeit eine Zustandsänderung zumindest eines der Dichtelemente bestimmt wird.

Die Aufgabe wird weiter insbesondere gelöst mit einem Verfahren zur Zustandsüberwachung eines Kolbenstangendichtsystems eines Kolbenkompressors, wobei das Kolbenstangendichtsystem zumindest zwei in einer Längsrichtung nacheinander folgend angeordnete Kammerringe mit zumindest je einem darin angeordneten Dichtelement umfasst, wobei eine durch die Dichtelemente sowie die Kammerringe verlaufende Kolbenstange in Längsrichtung hin und her bewegt und durch die Dichtelemente abgedichtet wird, wobei das Kolbenstangendichtsystem eine Eintrittsseite und eine Austrittsseite aufweist, zwischen welchen ein Differenzdruck auftritt, wobei der auftretende Differenzdruck eine statische Druckkomponente und eine dynamische Druckkomponente aufweist, und wobei sich ein Leckgas in den Kammerringen befindet, wobei in dem Kolbenstangendichtsystem zumindest die dynamische Druckkomponente des Leckgases gemessen wird, und wobei aus einer Veränderung der dynamischen Druckkomponente in Funktion der Zeit eine Zustandsänderung zumindest eines der Dichtelemente bestimmt wird.

Die Aufgabe wird weiter insbesondere gelöst mit einem Überwachungssystem zur Zustandsüberwachung eines Kolbenstangendichtsystems eines Kolbenkompressors, wobei der Kolbenkompressor einen Kolben sowie einen Kompressionsraum umfasst, wobei ein Gas mittels des Kolbens im Kompressionsraum von einem Saugdruck auf einen Enddruck verdichtbar ist, wobei das Kolbenstangendichtsystem zumindest zwei in einer Längsrichtung nacheinander folgend angeordnete Kammerring mit zumindest je einem darin angeordneten Dichtelement umfasst, wobei eine in Längsrichtung hin und her bewegliche Kolbenstange durch die Dichtelemente sowie die Kammerringe verläuft, wobei die Kolbenstange mit dem Kolben verbunden ist, wobei das Kolbenstangendichtsystem eine Eintrittsseite und eine Austrittsseite aufweist, wobei an der Eintrittsseite der Druck des Kompressionsraums anliegt, wobei zumindest ein Drucksensor zum Messen zumindest der dynamischen Druckkomponente eines sich in den Kammerringen befindlichen Leckgases vorgesehen ist, und wobei eine Speicher- und Auswertevorrichtung eine Vielzahl von gemessenen dynamischen Druckkomponenten speichert, und wobei die Auswertevorrichtung einer Veränderung der dynamischen Druckkomponente in Funktion der Zeit überwacht, und daraus eine Zustandsänderung zumindest eines der Dichtelemente ableitet.

Die Aufgabe wird zudem insbesondere gelöst mit einem Überwachungssystem zur Zustandsüberwachung eines Kolbenstangendichtsystems eines Kolbenkompressors, wobei das Kolbenstangendichtsystem zumindest zwei in einer Längsrichtung nacheinander folgend angeordnete Kammerring mit zumindest je einem darin angeordneten Dichtelement umfasst, wobei eine in Längsrichtung hin und her bewegliche Kolbenstange durch die Dichtelemente sowie die Kammerringe verläuft, wobei die Kolbenstange mit einem Kolben verbunden ist, wobei das Kolbenstangendichtsystem eine Eintrittsseite und eine Austrittsseite aufweist, und wobei bei zumindest einer der Kammerringe ein Drucksensor angeordnet ist zum Messen zumindest der dynamischen Druckkomponente eines sich in den Kammerringen befindlichen Leckgases, und wobei eine Speicher- und Auswertevorrichtung eine Vielzahl von gemessenen dynamischen Druckkomponenten speichert, und wobei die Auswertevorrichtung einer Veränderung der dynamischen Druckkomponente in Funktion der Zeit überwacht, und daraus eine Zustandsänderung zumindest eines der Dichtelemente ableitet.

Das erfindungsgemässe Verfahren zur Zustandsüberwachung des Kolbenstangendichtsystems eines Kolbenkompressors weist den Vorteil auf, dass der Zustand des Kolbenstangendichtsystems bzw. der Verschleiss der sich in dem Kolbenstangendichtsystem befindlichen Dichtelemente auf einfache, kostengünstige und sehr präzise Weise überwachtbar ist. Die Überwachung kann beispielsweise in vorgegebenen Zeitabständen, beispielsweise alle paar Tage, und besonders bevorzugt kontinuierlich erfolgen, indem der Zustand der Dichtelemente beispielsweise mehrmals pro Minute oder mehrmals pro Tag überwacht wird. Bei einer vorgeschriebenen ununterbrochenen Laufzeit von beispielsweise mindestens 8000 Stunden bedeutet dies, dass das Kolbenstangendichtsystem während etwa eines Jahres kontinuierlich überwacht wird. Die erfindungsgemässe Zustandsüberwachung erkennt aus den gemessenen Werten die Dichtwirkung zumindest eines einzigen Dichtelementes und vorzugsweise die Dichtwirkung einer Mehrzahl oder aller Dichtelemente eines Kolbenstangendichtsystems, sodass daraus der Zustand des jeweiligen Dichtelementes und vorzugsweise der individuelle Zustand jedes Dichtelementes betreffend dessen Dichtwirkung ermittelt werden kann. Die erfindungsgemässe Zustandsüberwachung weist zudem den Vorteil auf, dass vorzugsweise ein teilweises Versagen oder ein vollständiges Versagen eines oder mehrerer der Dichtelemente auf Grund des jeweiligen ermittelten Zustandes vorhergesagt und vorzugsweise mit einer genügend grossen Vorlaufzeit erkannt werden kann, sodass das Überwachungssystem vorteilhafterweise bereits vor einem vollständigen Versagen der Dichtelemente eine Warn- oder Zustandsmeldung abgeben kann, sodass für die Planung einer Wartung des Kolbenstangendichtsystems genügend Vorlaufzeit zur Verfügung steht. Die mit der erfindungsgemässen Zustandsüberwachung vorteilhafterweise gewonnene Betriebssicherheit erlaubt es auch das Kolbenstangendichtsystem, falls erwünscht, wartungsfrei während einer Zeitdauer von mehr als 8000 Stunden zu betreiben. Andererseits können auch gravierende Versagen des Kolbenstangendichtsystems, beispielsweise ein Bruch oder eine elastisch-plastische Deformation eines Dichtelementes, eindeutig erkannt werden, und daher eine Wartung zeitlich geplant werden, und vorzugsweise zudem beispielsweise die verbleibende Zeitdauer eines noch möglichen, zuverlässigen Betriebs des Kolbenstangendichtsystems bis zur zwingend notwendigen Durchführen der Wartung berechnet werden.

Beim erfindungsgemässen Verfahren wird der Zustand beziehungswiese die Dichtwirkung der in einem Kolbenstangendichtsystem eines Kolbenkompressors angeordneten Dichtelemente erfasst. Der Kolbenkompressor umfasst einen hin- und her beweglichen Kolben sowie einen Kompressionsraum, wobei der Kolben derart auf den Kompressionsraum einwirkt, dass im Kompressionsraum ein Gas von einem Saugdruck auf einen Enddruck verdichtet wird. Das Kolbenstangendichtsystem umfasst zumindest zwei in einer Längsrichtung nacheinander folgend angeordnete Kammerringe mit zumindest je einem darin angeordneten Dichtelement, wobei eine durch die Dichtelemente sowie die Kammerringe verlaufende, mit dem Kolben verbundene Kolbenstange in Längsrichtung hin und her bewegt und durch die Dichtelemente abgedichtet wird. Das Kolbenstangendichtsystem weist eine Eintrittsseite und eine Austrittsseite aufweist, wobei an der Eintrittsseite der Druck des Kompressionsraums anliegt, und wobei zwischen Eintrittsseite und Austrittsseite ein Differenzdruck auftritt. Vorzugsweise liegt an der Austrittsseite ein Aussendruck oder ein Umgebungsdruck an, vorzugsweise von 1 bar. Der auftretende Differenzdruck weist eine statische Druckkomponente, vorzugsweise den Saugdruck, und eine dynamische Druckkomponente auf, wobei die dynamische Druckkomponente in Abhängigkeit der Stellung des Kolbens bzw. in Abhängigkeit des Kurbelwellenwinkels der den Kolben bzw. die Kolbenstange antreibenden Kurbelwelle verändert wird. In den Kammerringen und allenfalls in den Zwischenräumen zwischen zwei Kammerringen befindet sich ein Leckgas, dessen Druck mit einem entsprechenden Sensor gemessen oder bestimmt werden kann. Da der statische Druck ein konstanter oder sich sehr langsam verändernder Druck ist, liegt vorzugsweise im Innenraum aller der Kammerringe derselbe statische Druck an, da der statische Druck vorzugsweise am letzten, der Austrittsseite zugewandten Dichtelement abgebaut wird. Da alle Kammerringe vorzugsweise im Wesentlichen denselben statischen Druck aufweisen kann aus dem statischen Druck unter Verwendung von als Reibdichtungsringe ausgestalteten Dichtelementen kein Hinweis auf den Zustand eines jeweiligen Dichtelementes abgeleitet werden. Erfindungsgemäss wird der zwischen der Eintrittsseite und der Austrittsseite des Kolbenstangendichtsystems anliegende Druck in den statischen Druck und einen dynamischen Druck unterteilt. Aus dem dynamischen Druck lässt sich der Zustand eines Dichtelementes ableiten. Von den im Kolbenstangendichtsystem angeordneten, als Reibdichtungsringe ausgestalteten Dichtelemente erfahren die der Eintrittsseite zugewandten Dichtelemente zuerst einen Verschleiss, weil im wesentliche der gesamte dynamische Druck an jeweils einem der Dichtelemente anliegt. Durch den zunehmenden Verschleiss der Dichtelemente von der Eintrittsseite in Richtung der Austrittsseite ist der dynamische Druck immer weiter von Seiten der Eintrittsseite zur Austrittsseite hin innerhalb des Kolbenstangendichtsystems messbar, oder anders ausgedrückt, der dynamische Druck dringt immer tiefer in das Kolbenstangendichtsystem ein. Im Gegensatz zum statischen Druck sind dem Verhalten des dynamischen Drucks wertvolle Informationen betreffend den Zustand der jeweiligen, im Kolbenstangendichtsystem angeordneten Dichtelemente zu entnehmen. Besonders vorteilhaft wird somit nur der dynamische Druck des Kolbenstangendichtsystems verwendet, gemessen und/oder berechnet, um daraus durch eine Beobachtung der Werte in Funktion der Zeit den Zustand bzw. eine Zustandsänderung zumindest eines der Dichtelemente und vorzugsweise einer Mehrzahl der Dichtelemente abzuleiten.

Ein sich im Kolbenstangendichtsystem befindliches Leckgas bewirkt einen statischen und/oder dynamischen Druckabfall der einzelnen Dichtelemente in dem Kolbenstangendichtsystem. Dieses Leckgas weist eine statische Druckkomponente und eine dynamische Druckkomponente auf. Erfindungsgemäss wird eine Veränderung der dynamischen Druckkomponente in Funktion der Zeit überwacht, wobei aus dieser Veränderung ein Rückschluss über die Zustandsänderung zumindest eines Dichtelementes gezogen werden kann, wobei diese Zustandsänderung üblicherweise aufgrund einer Veränderung der Dichtheit, beispielsweise durch Verschleiss, Bruch oder elastisch-plastische Deformation des Dichtelementes hervorgerufen wird.

### Kurze Beschreibung der Zeichnungen

Die zur Erläuterung der Ausführungsbeispiele verwendeten Zeichnungen zeigen:
- Fig. 1: einen schematisch vereinfachten Längsschnitt durch einen Kolbenverdichter;
- Fig. 2: einen Längsschnitt durch ein Kolbenstangendichtsystem;
- Fig. 3: einen Verlauf des Drucks am Eintritt des Kolbenstangendichtsystems in Funktion des Kurbelwinkels;
- Fig. 4: den Saugdruck sowie den dynamischen Druck in nacheinander folgend angeordneten Kammerringen mit neuen Dichtungsringen;
- Fig. 5: den Saugdruck sowie den dynamischen Druck in nacheinander folgend angeordneten Kammerringen mit Dichtungsringen, die teilweise einen Verschleiss aufweisen;
- Fig. 6: einen Längsschnitt durch ein weiteres Kolbenstangendichtsystem;
- Fig. 7: ein weiteres Beispiel einer Zustandsüberwachung eines Kolbenstangendichtsystems;
- Fig. 8: einen Verlauf eines dynamischen Drucks in Abhängigkeit des Kurbelwellenwinkels;
- Fig. 9: ein weiteres Beispiel einer Zustandsüberwachung eines Kolbenstangendichtsystems;
- Fig. 10: einen schematisch vereinfachten Längsschnitt durch ein weiteres Ausführungsbeispiel eines Zylinders mit Kolben und Kolbenstangendichtsystem.

Grundsätzlich sind in den Zeichnungen gleiche Teile mit gleichen Bezugszeichen versehen.

### Wege zur Ausführung der Erfindung

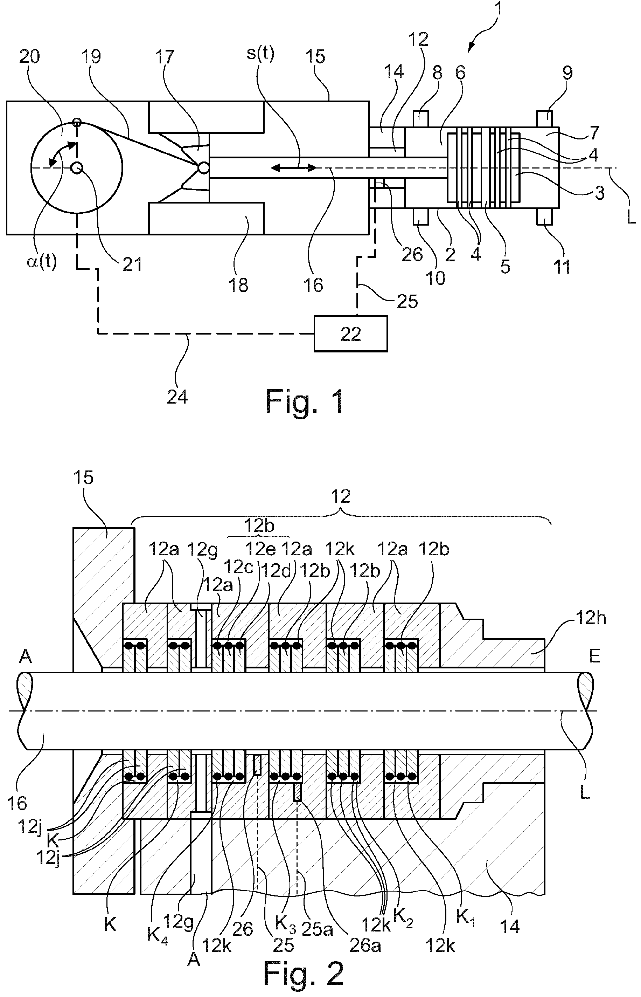

Figur 1 zeigt einen Kolbenverdichter 1 zum Verdichten eines Gases, umfassend einen in horizontaler Richtung verlaufenden Zylinder 2 sowie umfassend einen innerhalb des Zylinders 2 in Längsrichtung L bzw. in Verlaufsrichtung des Zylinders 2 beweglichen Kolben 3. Der Kolbenverdichter 1 umfasst zudem eine Kolbenstange 16, ein Kolbenstangendichtsystem 12, einen Kreuzkopf 17 mit einer Linearführung 18, eine Schubstange 19, eine Kurbel 20 sowie eine Antriebswelle 21. Der Kolben 3 ist im dargestellten Ausführungsbeispiel doppelwirkend ausgestaltet und umfasst Dichtungsringe 4 sowie einen Führungsring 5, wobei der Kolben 3 den Innenraum des Zylinders 2 in einen ersten Innenraum 6 sowie einen zweiten Innenraum 7 bzw. einem ersten Kompressionsraum 6 und einem zweiten Kompressionsraum 7 unterteilt, wobei diese beiden Innenräume je ein Eingangsventil 8, 9 sowie je ein Ausgangsventil 10, 11 aufweisen. Der Zylinder 2 ist über ein Zwischenstück 14 mit dem Gehäuse 15 verbunden, wobei im Zwischenstück zudem das Kolbenstangendichtsystem 12 angeordnet sind. In dem Kolbenstangendichtsystem 12 ist zumindest ein Sensor 26 angeordnet, um zumindest an einer Stelle einen Druck innerhalb des Kolbenstangendichtsystems 12 zu erfassen. Eine Überwachungsvorrichtung 22 erfasst über eine Signalleitung 24 und einen nicht im Detail dargestellten, zusätzlichen Sensor beispielsweise den Verschiebeweg s(t) des Kolbens 3 im Zylinder 7 in Funktion der Zeit t, den Verschiebeweg s(t) der Kolbenstange 16 in Funktion der Zeit t oder einen Drehwinkel α(t) der Antriebswelle 21 in Funktion der Zeit t. Die Überwachungsvorrichtung 22 erfasst über die Signalleitung 25 zudem den Wert des zumindest einen Sensors 26 zum Messen des Drucks im Kolbenstangendichtsystem 12.

Figur 2 zeigt in einem Längsschnitt ein Ausführungsbeispiel eines Kolbenstangendichtsystems 12 umfassend sechs Kammerringe 12a, wobei jeder Kammerring 12a gegen Aussen einen Innenhohlraum, eine sogenannte Kammer K begrenzt. Das Kolbenstangendichtsystem 12 weist eine Eintrittsseite E auf, welche, wie aus Figur 1 ersichtlich, dem Innenraum 6 bzw. dem Kompressionsraum 6 des Zylinders 2 zugewandt ist, und weist gegenüberliegend eine Austrittsseite A auf, bei welcher üblicherweise ein atmosphärischer Umgebungsdruck anliegt. Die Eintrittsseite E ist vorzugsweise angrenzend an den Kompressionsraum 6 angeordnet und bildet vorzugsweise eine Begrenzung des Kompressionsraums 6 aus, sodass der Kompressionsraum 6 und das Kolbenstangendichtsystem 12 über die Eintrittsseite E Fluid leitend verbunden sind. Ausgehend von der Eintrittsseite E umfasst das beispielhaft dargestellte Kolbenstangendichtsystem 12 in Längsrichtung L nacheinander folgend angeordnet sechs Kammerringe 12a, wobei die ersten vier Kammerringe 12a eine erste Kammer K1, eine zweite Kammer K2, eine dritte Kammer K3 und eine vierte Kammer K4 ausbilden, in welchen je ein Dichtelement 12b angeordnet, wobei jedes Dichtelement 12b einen Dichtungsring 12e, einen Stützring 12c sowie einen Deckring 12d umfasst. Die Dichtelemente 12b könnten auch anders ausgestaltet sein. Zwischen der dritten und vierten Kammer K3, K4 ist ein Drucksensor 26 angeordnet, um den Druck des Leckgases im Zwischenraum zwischen dritter und vierter Kammer K3, K4 zu messen, wobei der Druck im Innenhohlraum der vierten Kammer K4 ebenfalls diesem Druck entspricht. In der dritten Kammer K3 ist zudem ein zweiter Drucksensor 26a angeordnet, um den Druck des Leckgases in dieser Kammer K3 zu messen. Die Drucksensoren 26, 26a sind über elektrische Leitungen 25, 25a mit der Ansteuerungsvorrichtung 22 verbunden. Nachfolgend dem vierten Kammerring 12a mit Kammer K4 ist links noch ein fünfter und sechster Kammerring 12a angeordnet, in deren Kammern K je zwei Sperrringe 12j angeordnet sind. Der fünfte Kammerring 12a umfasst zudem einen Leckgaskanal 12g, der an seinem Ausgang in die Umgebung mit atmosphärischem Druck mündet, sodass dieser Ausgang als Austrittsseite A bezeichnet werden kann. Die Kolbenstange 16 verläuft durch die Sperrringe 12j, die Dichtelemente 12b sowie die Kammerringe 12a. Das Kolbenstangendichtsystem 12 umfasst zudem ein Teilgehäuse 12h. Das Kolbenstangendichtsystem 12 ist im Zwischenstück 14 angeordnet und mit dem Antriebsgehäuse 15 verbunden. Die Dichtelemente 12b sind als Verschleiss behaftete Reibringe ausgestaltet, deren Dichtflächen an der Oberfläche der Kolbenstange 16 anliegt, um dadurch eine sehr niedrige Leckage zu erzielen. Damit die hohe Dichtwirkung der Dichtelemente 12b während des Betriebs während eines möglichst langen Zeitraums aufrecht erhalten bleibt sind die Dichtelemente 12b derart gestaltet, dass deren Dichtflächen trotz des fortschreitenden Verschleisses möglichst vollständig in Kontakt mit der Kolbenstange 16 verbleiben und so die Durchtrittsfläche für das Leckgas minimieren wird. Die Dichtelemente 12b weist somit eine Verschleisskompensation auf. Das Kolbenstangendichtsystem 12 gemäss Figur 2 umfasst eine Reihenschaltung von vier solchen gasdichten Dichtelementen 12b, wobei jedes Dichtelement 12b in einem separaten Kammerring 12a angeordnet ist. Ein weiteres Ausführungsbeispiel könnte, im Unterschied zum Ausführungsbeispiel gemäss Figur 2, keinen Leckgaskanal 12g aufweisen, wobei in den letzten zwei, links angeordneten Kammerringen 12a Dichtelemente 12b anstelle der Sperrringe 12j angeordnet sind, sodass sich die Austrittseite A, wie in Figur 2 dargestellt, links im Bereich der Kolbenstange 16 befindet.

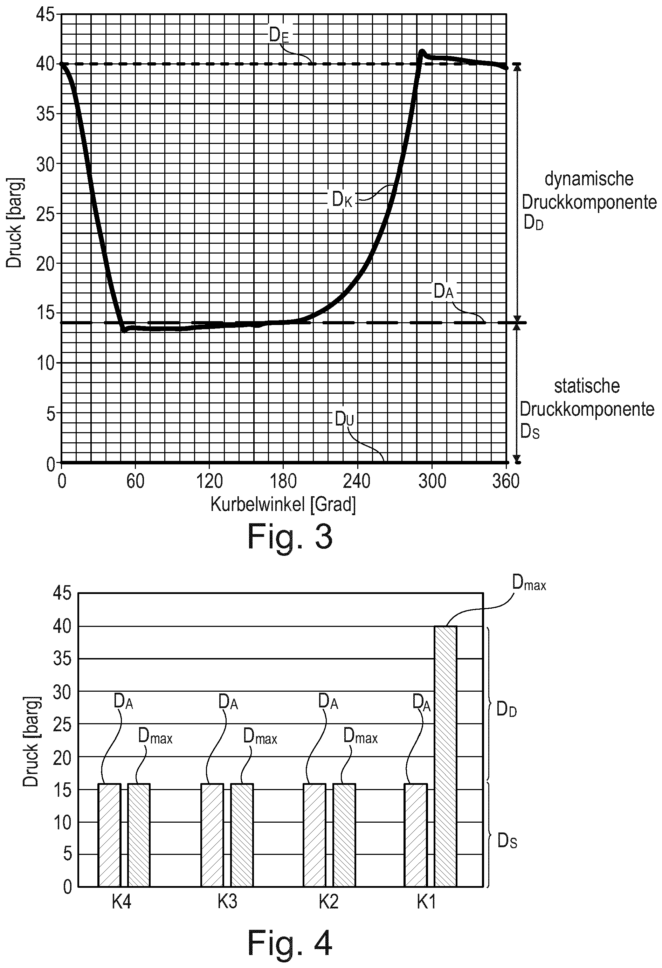

Figur 3 zeigt beispielhaft einen möglichen Verlauf des während eines Betriebs des Kolbenkompressors 1 an der Eintrittsseite E des Kolbenstangendichtsystems 12 bzw. in der ersten Kammer K1 des ersten Kammerrings 12a anliegenden Drucks des ersten Kompressionsraums 6, auch als Zylinderdrucks D_{K} bezeichnet, oder als der zwischen der Eintrittsseite E und der Austrittsseite A anliegende Differenzdrucks D_{K} bezeichnet, in Funktion des Kurbelwellenwinkels, wobei der Verlauf des Differenzdrucks D_{K} durch das durch den Kolben 3 innerhalb des Zylinders 2 komprimierte Fluid verursacht wird. Ein zu förderndes Fluid wird vom Kolben 3 unter einem Saugdruck D_{A} angesogen und im Zylinder 2 auf einen Enddruck D_{E} komprimiert. Während dieses Ansaug- und anschliessenden Kompressionsvorgangs weist der Druck an der Eintrittsseite E des Kolbenstangendichtsystems 12 in Abhängigkeit des Kurbelwinkels α den dargestellten Verlauf des Zylinderdrucks D_{K} bzw. des Differenzdrucks D_{K} auf. Die Austrittsseite A sowie der Leckgaskanal 12g weist z.B. den Druck einer nachfolgenden Kompressionsstufe oder im vorliegenden Beispiel einen Umgebungsdruck D_{U} von 0 bar auf. Der im Kolbenstangendichtsystem 12 auftretende Druck kann, wie in Figur 3 dargestellt, in eine statische Druckkomponente D_{S} und eine dynamische Druckkomponente D_{D} unterteilt werden. Die statische Druckkomponente D_{S} ist vorzugsweise gleich dem Saugdruck D_{A}. Die dynamische Druckkomponente D_{D} ist die sich in Abhängigkeit der Zeit beziehungsweise in Abhängigkeit des Kurbelwinkels ändernde Druckkomponente, wobei die dynamische Druckkomponente D_{D} an der Eingangsseite E der Differenz zwischen dem am Kolbenstangendichtsystem 12 anliegenden Zylinderdruck D_{K} und dem Saugdruck D_{A} bzw. dem statischen Druck D_{S} entspricht. Die statische Druckkomponente D_{S} ist die Differenz zwischen dem Saugdruck D_{A} der betrachteten Verdichtungsstufe und dem an der Austrittsseite A anliegenden Druck D_{U}, wobei im vorliegenden Beispiel der Druck D_{U} dem atmosphärischen Druck entspricht, sodass die statische Druckkomponente dem Saugdruck D_{A} entspricht.

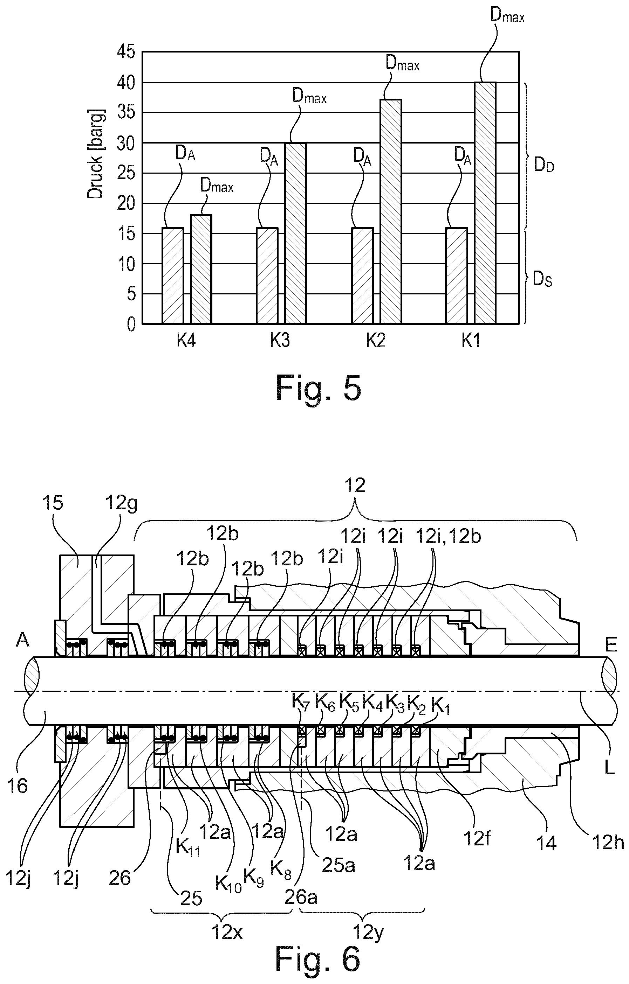

Figur 4 zeigt ein Beispiel zur Zustandsüberwachung des Kolbenstangendichtsystems 12 gemäss Figur 2. Der erste Kammerring 12a bildet die Kammer K1 aus, der zweite Kammerring 12a die Kammer K2, der dritte Kammerring 12a die Kammer K3 und der vierte Kammerring 12a die Kammer K4. In dem in Figur 4 dargestellten Beispiel ist in jeder der vier Kammern ein Drucksensor 26, 26a angeordnet, mit Hilfe derer der Druck in der jeweiligen Kammer messbar ist. Die Drucksensoren 26, 26a können in einer Vielzahl von Möglichkeiten angeordnet sein, um den Druck in der jeweiligen Kammer zu messen, beispielsweise auch innerhalb des Kammerrings 12a, oder ausserhalb des Kammerrings 12, mit einer Fluid leitenden Verbindung in die jeweilige Kammer. Figur 4 zeigt für jeden der vier Kammern K1, K2, K3, K4 den in der jeweiligen Kammer anliegenden statischen Druck D_{A} und den auftretenden maximalen Druck D_{Max}, welcher sich aus der statischen Druckkomponente D_{S} und der dynamischen Druckkomponente D_{D} zusammensetzt. Die statische Druckkomponente D_{S} entspricht im dargestellten Beispiel dem Saugdruck D_{A}. Der Verlauf des Drucks D_{K} bzw. des Differenzdrucks D_{K} ist grundsätzlich abhängig vom Kurbelwellenwinkel bzw. der Stellung des Kolbens in Funktion der Zeit. Der in der jeweiligen Kammer K1, K2, K3, K4 auftretende maximale Druck D_{Max}, beziehungsweise die Summe von statischer Druckkomponenten D_{S} und dynamischer Druckkomponente D_{D} ist hingegen abhängig von der Dichtwirkung bzw. vom Zustand bzw. dem Verschleiss der jeweiligen Dichtelemente 12b. Das Kolbenstangendichtsystem 12 weist im Neuzustand nur in der Kammer K1 einen hohen maximalen Druck D_{Max} auf, weil die gesamte dynamische Druckkomponente D_{D} am ersten reibenden Dichtelement 12b, welches sich in der Kammer K1 befindet, abgedichtet wird. Mit fortschreitender Betriebsdauer unterliegen die Dichtelemente 12b einem Verschleiss, was, wie in Figur 5 dargestellt, zur Folge hat, dass der maximale Druck D_{Max} ausgehend von der Eintrittsseite E in weitere Innenräume K2, K3, K4 von Kammerringen 12a eindringen kann bzw. sich ausgehend von der Eintrittsseite E in diese weiteren Kammern K2, K3, K4 fortpflanzen kann, sodass in den einzelnen Kammern K1 bis K4 beispielsweise die in Figur 5 dargestellten maximalen Drücke D_{Max} gemessen werden. Der Zustand des Kolbenstangendichtsystems 12 kann nun beispielsweise auf die nachfolgenden Weisen überwacht werden:
A) Der Druck des Leckgases wird in einer einzigen Kammer gemessen, nämlich in der von der Eintrittsseite E am weitesten entfernen Kammer K4. Solang der darin gemessene Druck im Wesentlichen dem Saugdruck D_{A} entspricht kann daraus geschlossen werden, dass zumindest eines der stromaufwärts zur Eintrittsseite E hin in den Kammern K1, K2, K3 angeordneten Dichtelemente 12b seine Dichtwirkung erfüllt, sodass in der Kammer K4 kein erhöhter Druck gemessen wird. Daraus kann geschlossen werden, dass die dynamische Druckkomponente D_{D} von einem der sich in den Kammern K2, K3 oder K4 befindlichen Dichtelemente 12d abgedichtet wird, und vorzugsweise vollständig abgedichtet wird. Im Ausführungsbeispiel gemäss Figur 5 wird in der Kammer K4 ein erhöhter maximaler Druck D_{Max} gemessen, woraus geschlossen werden kann, dass alle in den Kammern K1, K2 und K3 angeordneten Dichtelemente 12b auf Grund ihres Verschleisses nicht mehr in der Lage sind eine vollständige Dichtwirkung zu erzielen.
B) Der Druck des Leckgases wird in jeder der Kammern K1, K2, K3 und K4 gemessen, sodass nebst dem Wert der maximalen Druckamplitude D_{Max} in jede Kammer zudem noch ein gegenseitiger Vergleich der dynamischen Druckkomponenten D_{D} der einzelnen Kammern K1 bis K4 möglich ist, bzw. die Verteilung des Drucks in den einzelnen Kammern. Der in Figur 5 dargestellten Verteilung ist zu entnehmen, dass die Dichtelemente 12b in den Kammern K1, K2 und K3 auf Grund des gemessenen, erhöhten maximalen Drucks D_{Max} bereits einen erheblichen Verschleiss aufweisen, und dass die dynamische Druckkomponente D_{D} im Wesentlichen nur noch von dem in der Kammer K4 angeordneten Dichtelement 12b abgedichtet wird.
C) Besonders aufschlussreich sind die in Figur 5 dargestellten Messergebnisse, wenn diese während einer längeren Zeitspanne, zum Beispiel einem Monat oder einem Jahr täglich gemessen und die Messergebnisse abgespeichert werden, und wenn die im Verlaufe der Zeit auftretende Veränderung der Messergebnisse analysiert wird. Mit zunehmender Betriebsdauer des Kolbenstangendichtsystems 12 wird sich der in den einzelnen Kammern K1, K2, K3 und K4 gemessene maximale Druck D_{Max} bzw. die dynamische Druckkomponente D_{D}, das heisst die Differenz zwischen maximalen Druck D_{Max} und dem statischen Druck D_{A}, ausgehend von der Kammer K1, in Richtung zur Austrittsseite A hin erhöhen, sodass aus den in Figur 5 dargestellten Messergebnissen ersichtlich ist, welche der Dichtelemente 12b und in welchem Masse die einzelnen Dichtelemente 12b noch zur Abdichtung beitragen bzw. ist aus Figur 5 ersichtlich wieweit die einzelnen Dichtelemente 12b bereits verschliessen sind. Oder, mit anderen Worten ausgedrückt, dringt der maximale Druck D_{Max} bzw. die dynamische Druckkomponente D_{D} mit zunehmender Betriebsdauer ausgehend von der Kammer K1 immer tiefer in das Kolbenstangendichtsystem 12 beziehungsweise in die nachfolgenden Kammern K2, K3 und K4 ein, sodass über diese Veränderung der dynamischen Druckkomponenten D_{D} in den einzelnen Kammern in Funktion der Zeit eine Zustandsänderung der Dichtelemente 12b bestimmbar ist. Der Zustand des Kolbenstangendichtsystems 12 und insbesondere der Zustand bzw. der Verschleiss der einzelnen Dichtelemente 12b, zumindest von einem der Dichtelemente 12b, ist somit sehr genau bestimmbar bzw. beobachtbar, sodass beispielsweise festgestellt werden kann, ob das Kolbenstangendichtsystem 12 noch zuverlässig abdichtet, oder es kann extrapoliert werden wie lange das Kolbenstangendichtsystem 12 voraussichtlich noch zuverlässig abdichtet, oder es kann abgeschätzt werden, welche der Dichtelemente 12b und vorzugsweise auch bis zu welchem Zeitpunkt die einzelnen Dichtelemente 12b ersetzt bzw. gewartet werden sollten.

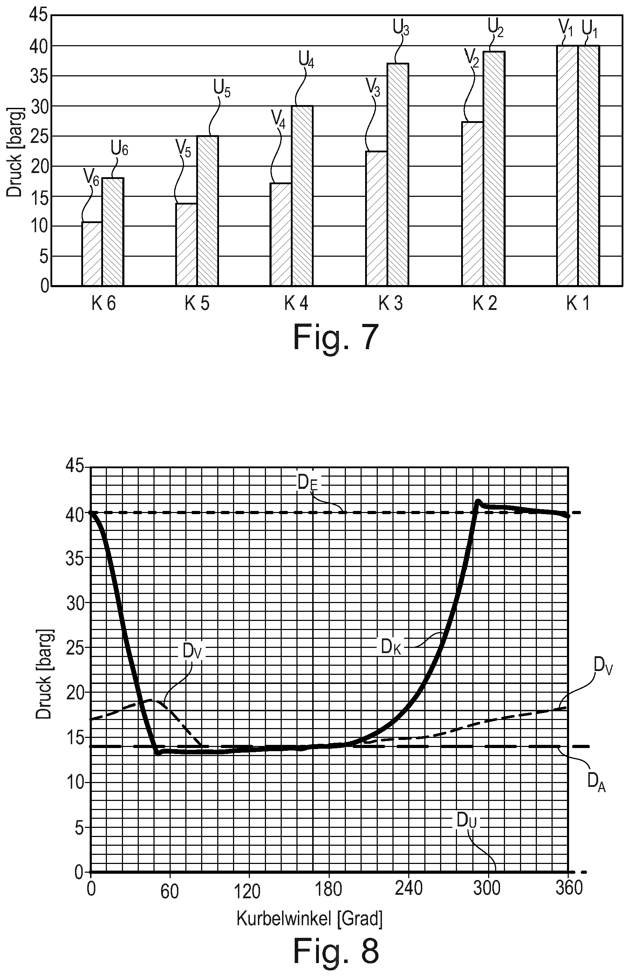

Figur 7 zeigt ein weiteres Beispiel einer Zustandsüberwachung eines Kolbenstangendichtsystems 12. Die in Figur 7 dargestellten Messwerte des maximalen Drucks D_{Max} der Kammern K1 bis K6 wurden an einem Kolbenstangendichtsystem 12 gemessen, das, in Unterschied zu dem in Figur 2 dargestellten Kolbenstangendichtsystem, sechs in Längsrichtung L nacheinander folgend angeordnete Kammern K1 bis K6 aufweist, mit je einem darin angeordneten Dichtelement 12b, wobei die Dichtelemente 12b, in Unterschied zum Ausführungsbeispiel gemäss Figur 2, die Kolbenstange 16 nicht oder nur leicht berühren, sodass zwischen der Stirnseite der Dichtelemente 12b und der Kolbenstange 16 zumindest teilweise ein Spalt besteht. Bei einer solchen Reihenschaltung von reibungsfreien Dichtelementen 12b wird die Druckdifferenz in unterschiedlichen Beträgen auf alle Kammern K1 bis K6 verteilt. Das erfindungsgemässe Verfahren ist auch zur Zustandsüberwachung eines derartigen Kolbenstangendichtsystems 12 geeignet. Figur 7 zeigt mit den Werten U1 bis U6 den in der jeweiligen Kammer K1 bis K6 anliegenden maximalen Drucks D_{Max} bei einem Kolbenstangendichtsystem 12 im Neuzustand. Figur 7 zeigt mit den Werten V1 bis V6 den nach einer gewissen Betriebsdauer, zum Beispiel nach 2000 Betriebsstunden in der jeweiligen Kammer K1 bis K6 anliegenden maximalen Drucks D_{Max}. Die während dieser Betriebsdauer aufgetretene Veränderung der dynamischen Druckkomponente D_{D} bzw. die aufgetretene Zustandsänderung jedes des sich in der jeweiligen Kammer K1 bis K6 befindlichen Dichtelementes 12b ist aus der Differenz der Werte U1-V1, bzw. U2-V2 usw. ersichtlich. Somit lässt sich der Zustand des Kolbenstangendichtsystems 12 beziehungsweise der Zustand der einzelnen, sich darin befindlichen Dichtelemente 12b überwachen, um beispielsweise eine allenfalls erforderliche Wartung der Dichtelemente 12b frühzeitig zu erkennen, um einerseits einen sicheren Betrieb des Kolbenstangendichtsystems 12 zu gewährleisten, und um andererseits ein Zeitfenster für eine erforderliche Wartung festzulegen.

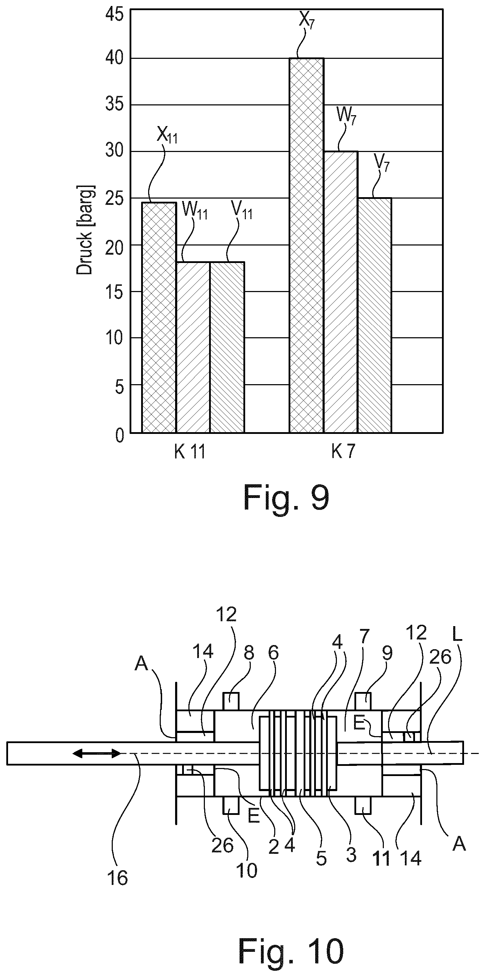

Figur 6 zeigt einen Längsschnitt durch ein weiteres Kolbenstangendichtsystem 12, das eine erste Teilpackung 12x sowie eine zweite Teilpackung 12y umfasst. Die erste Teilpackung 12x umfasst dieselben, wie in Figur 4 dargestellten, Kammerringe 12a mit Kammern K8, K9, K10, K11 sowie in diesen Kammern angeordneten reibende Dichtelemente 12b umfassend je einen Dichtungsring 12e, einen Stützring 12c sowie einen Deckring 12d. Das Kolbenstangendichtsystem 12 gemäss Figur 6 umfasst zudem einen Leckgaskanal 12g sowie nachfolgend zur Austrittsseite A hin angeordnet zwei Kammerringe 12a mit darin angeordneten Sperrringen 12j. Die zweite Teilpackung 12y umfasst sieben in Längsrichtung L nacheinander folgend angeordnete Kammerringe 12a mit Kammern K1, K2, K3, K4, K5, K6 und K7, wobei in jeder dieser Kammern als Dichtelement 12b ein Druckbrecherring 12i angeordnet ist. Ein solcher Druckbrecherring 12i hat die Eigenschaft, dass dieser das Leckgas in Längsrichtung L nicht vollständig abdichtet, dass dieser jedoch die Amplitude der dynamischen Druckkomponente D_{D} reduziert. Im dargestellten Ausführungsbeispiel ist ein Sensor 26 zur Überwachung des Drucks in der Kammer K11 sowie ein Sensor 26a zur Überwachung des Drucks in der Kammer K7 angeordnet. Eine solche Anordnung ist wiederum geeignet den Zustand des Kolbenstangendichtsystems 12 beziehungsweise den Zustand der sich darin befindlichen Dichtelemente 12b zu überwachen. Die Figur 9 zeigt die gemessenen Werte V7, V11 des maximalen Drucks D_{Max} in den Kammern K7 und K11 eines Kolbenstangendichtsystems 12 im Neuzustand, und zeigt mit den Werten W7, W11 die gemessenen Werte des maximalen Drucks D_{Max} in den Kammern K7 und K11 nach beispielsweise 5000 Betriebsstunden, und zeigt mit den Werten X7, X11 die gemessenen Wert des maximalen Drucks D_{Max} in den Kammern K7 und K11 nach beispielsweise 10000 Betriebsstunden. Aus diesen Werten ist ersichtlich, dass das Kolbenstangendichtsystem 12 nach 5000 Betriebsstunden noch zuverlässig funktioniert, wogegen aus dem Wert X7 ersichtlich ist, dass die Druckbrecherringe 12i bzw. die zweite Teilpackung 2y nach 10000 Betriebsstunden keine genügende Dichtwirkung mehr erbringen, wogegen die Dichtwirkung der ersten Teilpackung 12x den Anforderungen noch genügt.

In einer weiteren vorteilhaften Ausgestaltung kann im Kolbenstangendichtsystem 12 gemäss Figur 6 ausgehend von der Eintrittsseite E ein Drucksensor 26a im letzten Kammerring 12a mit darin angeordnetem Druckbrecherring 12i, daher in der Kammer K7, und ein Drucksensor 26 im ersten Kammerring 12a mit darin angeordnetem Reibdichtungsring 12e, daher in der Kammer K8 angeordnet sein, um den Zustand bzw. eine Zustandsänderung des in der Kammer 7 angeordneten Druckbrecherrings 12i bestmöglich zu erfassen.

Bei den in den Figuren 4, 5 und 7 dargestellten Ausführungsbeispielen erfolgt die Überwachung des Drucks in den jeweiligen Kammern K jeweils durch eine Messung des maximal in der jeweiligen Kammer K anliegenden Drucks. Anstelle des maximalen auftretenden Drucks kann auch der Druckverlauf in Funktion des Kurbelwellenwinkels gemessen werden. Figur 8 zeigt einen derartigen Druckverlauf D_{V} in Funktion des Kurbelwellenwinkels. Aus dem Anstieg während der ansteigenden Flanke, dem maximalen Wert, dem Kurbelwellenwinkel, bei welchem der maximale Wert erreicht wird, oder dem Abstieg während der absteigenden Flanke können ebenfalls Aussagen zum Zustand der Dichtelemente 12b abgeleitet werden.

Es kann sich als vorteilhaft erweisen in dem Kolbenstangendichtsystem 12 zumindest an einer Stelle zusätzlich eine Temperatur T gemessen wird, insbesondere die Temperatur der Kolbenstange 16, beispielsweise mit einem Infrarotsensor. Ein intakter, funktionsfähiger Reibring hat zur Folge, dass sich die Kolbenstange 16 auf Grund der auftretenden Reibung erwärmt. Die Erfassung der Temperatur an einer Stelle im Kolbenstangendichtsystem 12, insbesondere der Kolbenstange 16, ergibt einen zusätzlichen Hinweis auf den Zustand eines Dichtelementes 12b. Zudem kann auch ein gebrochenes Dichtelement 12b und/oder ein elastisch-plastisch deformiertes Dichtelement 12 zu einer Erwärmung der Kolbenstange 16 führen und dieser Zustand über die Messung der Temperatur erfasst werden.

Figur 10 zeigt einen schematisch vereinfachten Längsschnitt durch ein weiteres Ausführungsbeispiel eines Zylinders 2 mit einem doppelwirkenden Kolben 3, der den Innenraum in einen ersten Kompressionsraum 6 und einen zweiten Kompressionsraum 7 unterteilt. Im Unterschied zur Ausführungsform gemäss Figur 1 ist an der Stirnseite des zweiten Kompressionsraums 7 ein zusätzliches Kolbenstangendichtsystem 12 angeordnet, wobei die Kolbenstange 16, im Unterschied zur Ausführungsform gemäss Figur 1, ausgehend vom Kolben 3 in Richtung der Längsachse L verlängert ist, durch das zusätzliche Kolbenstangendichtsystem 12 hindurch verläuft, und in Richtung der Längsachs L verschiebbar gelagert ist. Somit weisen beide Kolbenstangendichtsysteme 12 eine Eintrittsseite E und eine Austrittsseite A auf, und zumindest eines und vorzugsweise beide Kolbenstangendichtsysteme 12 können mit dem erfindungsgemässen Verfahren zur Zustandsüberwachung betrieben werden.

Der Kolbenverdichter 1 ist im dargestellten Beispiel immer als horizontaler Kolbenverdichter dargestellt. Der Kolbenverdichter könnte jedoch auch in einer anderen Richtung verlaufen und insbesondere auch in vertikaler Richtung verlaufend ausgestaltet sein, mit einer vertikal verlaufenden Kolbenstange.

Alle dargestellten Ausführungsbeispiele zeigen einen doppelwirkenden Kolben 3. Der Kolben könnte jedoch auch einfach wirkend ausgestaltet sein, indem der Zylinder 2 nur einen einzigen Kompressionsraum 6 aufweist.

Es könnten auch eine Mehrzahl von Kolbenverdichtern 1 bzw. eine Mehrzahl von Zylindern 2 in Serie hintereinandergeschaltet sein, zum Beispiel 2, 3, 4 oder 5, wobei der Enddruck des vorhergehenden Zylinders den Saugdruck des nachfolgenden Zylinders bildet. In einer solchen seriellen Anordnung könnte beispielsweise der Saugdruck D_{A} eines der Zylinders 80 bar betragen, und der Enddruck D_{E} dieses Zylinders 300 Bar betragen. Zumindest einer und vorzugsweise aller derart in Serie geschalteter Kolbenverdichter 1 bzw. die in Serie geschalteten Zylinder 2 können gemäss dem erfindungsgemässen Verfahren betrieben werden bzw. die erfindungsgemässe Vorrichtung aufweisen.

## Patentansprüche

1. Verfahren zur Zustandsüberwachung eines Kolbenstangendichtsystems (12) eines Kolbenkompressors (1) umfassend einen Kompressionsraum (6,7), wobei im Kompressionsraum (6,7) des Kolbenkompressors (1) ein Gas von einem Saugdruck (D_{A}) auf einen Enddruck (D_{E}) verdichtet wird, wobei das Kolbenstangendichtsystem (12) zumindest zwei in einer Längsrichtung (L) nacheinander folgend angeordnete Kammerringe (12a) mit zumindest je einem darin angeordneten Dichtelement (12b) umfasst, wobei eine durch die Dichtelemente (12b) sowie die Kammerringe (12a) verlaufende Kolbenstange (16) in Längsrichtung (L) mittels einer auf einer Antriebswelle (21) befindlichen Kurbel (20) hin und her bewegt und durch die Dichtelemente (12b) abgedichtet wird, wobei das Kolbenstangendichtsystem (12) eine Eintrittsseite (E) und eine Austrittsseite (A) aufweist, wobei an der Eintrittsseite (E ) der Druck des Kompressionsraums (6,7) anliegt, und wobei zwischen Eintrittsseite (E ) und Austrittsseite (A) ein Differenzdruck (D_{K}) auftritt, wobei der auftretende Differenzdruck (D_{K}) eine statische Druckkomponente (Ds) und eine dynamische Druckkomponente (D_{D}) aufweist, wobei die dynamische Druckkomponente (D_{D}) in Abhängigkeit eines Kurbelwinkels der Kurbel (20) verändert wird, wobei sich ein Leckgas in den Kammerringen (12a) befindet, wobei in dem Kolbenstangendichtsystem (12) zumindest die dynamische Druckkomponente (D_{D}) des Leckgases gemessen wird, und wobei aus einer Veränderung der dynamischen Druckkomponente (D_{D}) in Funktion der Zeit eine Zustandsänderung zumindest eines der Dichtelemente (12b) bestimmt wird.

2. Verfahren nach Anspruch 1, **dadurch gekennzeichnet, dass** die statische Druckkomponente (D_{S}) dem Saugdruck (D_{A}) entspricht, und dass die dynamische Druckkomponente (D_{D}) als Differenz zwischen dem Differenzdruck (D_{K}) und der statischen Druckkomponente (D_{S}) ermittelt wird.

3. Verfahren nach Anspruch 1 oder 2, **dadurch gekennzeichnet, dass** das Dichtelement (12b) gasdicht ausgestaltet ist, indem dieses einen Reibdichtungsring (12e) ausbildet, der an der Kolbenstange (16) anliegt, wobei der Reibdichtungsring (12e) durch die zwischen Reibdichtungsring (12e) und Kolbenstange (16) auftretende Reibung verschlissen wird.

4. Verfahren nach Anspruch 1, 2 oder 3, **dadurch gekennzeichnet, dass** das Dichtelement (12b) zumindest einen nicht vollständig dichtenden Druckbrecherring (12i) umfassen.

5. Verfahren nach einem der Ansprüche 3 oder 4, **dadurch gekennzeichnet, dass** die dynamische Druckkomponente (D_{D}) des Leckgases zumindest bei demjenigen Kammerring (12a) gemessen wird, welcher in Längsrichtung (L) am weitesten entfernt von der Eintrittsseite (E) angeordnet ist.

6. Verfahren nach einem der Ansprüche 4 oder 5, **dadurch gekennzeichnet, dass** das Kolbenstangendichtsystem (12) ausgehend von der Eintrittsseite (E ) in Längsrichtung (L) eine Mehrzahl von Kammerringen (12a) mit darin angeordneten Druckbrecherringen (12i) und nachfolgend eine Mehrzahl von Kammerringen (12a) mit darin angeordneten Reibdichtungsringen (12e) umfasst, und dass die dynamische Druckkomponente (D_{D}) des Leckgases im letzten Kammerring (12a) mit darin angeordnetem Druckbrecherring (12i) oder im ersten Kammerring (12a) mit darin angeordnetem Reibdichtungsring (12e) gemessen wird.

7. Verfahren nach einem der Ansprüche 1 bis 6, **dadurch gekennzeichnet, dass** die dynamische Druckkomponente (D_{D}) des Leckgases in einer Mehrzahl von Kammerringen (12a) gemessen wird, und dass der Zustand des sich im jeweiligen Kammerring (12a) befindlichen Dichtelementes (12b) anhand der in den einzelnen Kammerringen (12a) gemessenen maximalen Amplitude (Dₘₐₓ) bestimmt wird.

8. Verfahren nach Anspruch 7, **dadurch gekennzeichnet, dass** eine maximalen Amplitude (Dmax1, Dmax2, Dmax3) der im jeweiligen Kammerring (12a) anliegenden dynamischen Druckkomponenten (D_{D}) mit zunehmender Betriebsdauer des Kolbenstangendichtsystems (12) von der Eintrittsseite (E ) zur Austrittsseite (A) hin grösser wird, und dass aus der Differenz der maximalen Amplitude (Dₘₐₓ₁, Dₘₐₓ₂, Dₘₐₓ₃) zweiter benachbarter Kammeringe (12) der Zustand der sich in diesen Kammerringen (12a) befindlichen Dichtelemente (12b) bestimmt wird.

9. Verfahren nach einem der vorhergehenden Ansprüche, **dadurch gekennzeichnet, dass** eine Veränderung der dynamischen Druckkomponente (D_{D}) während einer Zeitdauer von zumindest 2000 Stunden und vorzugsweise während zumindest 8000 Stunden überwacht wird.

10. Verfahren nach einem der vorhergehenden Ansprüche, **dadurch gekennzeichnet, dass** in dem Kolbenstangendichtsystem (12) zumindest an einer Stelle eine Temperatur (T) gemessen wird, insbesondere die Temperatur der Kolbenstange (16).

11. Kolbenkompressor (1) mit einem Überwachungssystem, wobei der Kolbenkompressor (1) einen Kolben (3) sowie einen Kompressionsraum (6,7) umfasst, wobei ein Gas mittels des Kolbens (3) im Kompressionsraum (6,7) von einem Saugdruck (D_{A}) auf einen Enddruck (D_{E}) verdichtbar ist, wobei der Kolbenkompressor (1) weiterhin Kolbenstangendichtsystem (12) umfasst, welches zumindest zwei in einer Längsrichtung (L) nacheinander folgend angeordnete Kammerringe (12a) mit zumindest je einem darin angeordneten Dichtelement (12b) umfasst, wobei eine mittels einer auf einer Antriebswelle (21) befindlichen Kurbel (20) in Längsrichtung (L) hin und her bewegliche Kolbenstange (16) durch die Dichtelemente (12b) sowie die Kammerringe (12a) verläuft, wobei die Kolbenstange (16) mit dem Kolben (3) verbunden ist, wobei das Kolbenstangendichtsystem (12) eine Eintrittsseite (E ) und eine Austrittsseite (A) aufweist, wobei an der Eintrittsseite (E) der Druck des Kompressionsraums (6,7) anliegt, **dadurch gekennzeichnet, dass** zumindest ein Drucksensor (26, 26a) zum Messen zumindest der dynamischen Druckkomponente (D_{D}) eines sich in den Kammerringen (12a) befindlichen Leckgases vorgesehen ist, und wobei eine Speicher- und Auswertevorrichtung (22) eine Vielzahl von gemessenen dynamischen Druckkomponenten (D_{D}) speichert, und wobei die Auswertevorrichtung (22) einer Veränderung der dynamischen Druckkomponente (D_{D}) in Funktion der Zeit überwacht, und daraus eine Zustandsänderung zumindest eines der Dichtelemente (12b) ableitet.

12. Kolbenkompressor mit Überwachungssystem nach Anspruch 11,
**dadurch gekennzeichnet, dass** dieses die dynamische Druckkomponente (D_{D}) als Differenz zwischen dem Differenzdruck (D_{K}) und der statischen Druckkomponente (D_{S}) ermittelt.

13. Kolbenkompressor mit Überwachungssystem nach Anspruch 11 oder 12, **dadurch gekennzeichnet, dass** die Dichtelemente (12b) als an der Kolbenstange (16) anliegende Reibungsringe ausgestaltet sind, und dass zumindest bei dem am nächsten zur Austrittsseite (A) hin angeordneten Kammerring (12a) ein Drucksensor (26) angeordnet ist zum Messen zumindest der dynamischen Druckkomponente (D_{D}) eines sich in den Kammerring (12a) befindlichen Leckgases.

14. Kolbenkompressor mit Überwachungssystem nach einem der Ansprüche 11 oder 13, **dadurch gekennzeichnet, dass** in Verlaufsrichtung (L) der Kolbenstange (16), ausgehend von der Eintrittsseite (E ), zuerst als Druckbrecherringe (12i) ausgestaltete Dichtelemente (12b) angeordnet ist, und dass nachfolgend zur Austrittsseite (A) hin als Reibungsringe ausgestaltete Dichtelemente (12b) angeordnet sind, und dass in Längsrichtung (L) zumindest ein Drucksensor (26) zwischen den Druckbrecherringen (12i) und den als Reibungsringen ausgestalteten Dichtelementen (12b) angeordnet ist.

## Claims

1. A method for monitoring the condition of a piston rod sealing system (12) of a reciprocating compressor (1) comprising a compression chamber (6, 7), wherein in the compression chamber (6, 7) of the reciprocating compressor (1) a gas is compressed from a suction pressure (D_{A}) to a discharge pressure (D_{E}), the piston rod sealing system (12) comprising at least two chamber rings (12a) arranged one after the other in a longitudinal direction (L) and each having at least one sealing element (12b) arranged therein, wherein a piston rod (16) ext,ending through the sealing elements (12b) as well as the chamber rings (12a) is moved back and forth in the longitudinal direction (L) by means of a a crank (20) being provided on a drive shaft (21) and is sealed by the sealing elements (12b), wherein the piston rod sealing system (12) has an inlet side (E) and an outlet side (A), wherein the pressure of the compression chamber (6, 7) is applied to the inlet side (E), and wherein a differential pressure (D_{K}) occurs between the inlet side (E) and the outlet side (A), the differential pressure (D_{K}) occurring having a static pressure component (Ds) and a dynamic pressure component (D_{D}), wherein the dynamic pressure component (D_{D}) is changed as a function of a crank angle of the crank (20), and wherein a leakage gas is located in the chamber rings (12a), wherein at least the dynamic pressure component (D_{D}) of the leakage gas is measured in the piston rod sealing system (12), and wherein a change in the state of at least one of the sealing elements (12b) is determined from a change in the dynamic pressure component (D_{D}) as a function of time.

2. The method of claim 1, **characterized in that** the static pressure component (D_{S}) corresponds to the suction pressure (D_{A}), and **in that** the dynamic pressure component (D_{D}) is determined as the difference between the differential pressure (D_{K}) and the static pressure component (D_{S}).

3. The method of claim 1 or 2, **characterized in that** the sealing element (12b) is configured to be gas-tight by forming a friction seal ring (12e) that abuts the piston rod (16), the friction seal ring (12e) being worn by the friction occurring between the friction seal ring (12e) and the piston rod (16).

4. The method of claim 1-3 , **characterized in that** the sealing element (12b) comprises at least one pressure breaker ring (12i) that does not seal completely.

5. The method according to one of claims 3 or 4, **characterized in that** the dynamic pressure component (D_{D}) of the leakage gas is measured at least at that chamber ring (12a) which is arranged furthest away from the inlet side (E ) in the longitudinal direction (L).

6. The method according to one of claims 4 or 5, **characterized in that** the piston rod sealing system (12) comprises, starting from the inlet side (E ) in the longitudinal direction (L), a plurality of chamber rings (12a) with pressure breaker rings (12i) arranged therein and subsequently a plurality of chamber rings (12a) with friction seal rings (12e) arranged therein, and that the dynamic pressure component (D_{D}) of the leakage gas is measured in the last chamber ring (12a) with pressure breaker ring (12i) arranged therein or in the first chamber ring (12a) with friction seal ring (12e) arranged therein.

7. The method according to one of claims 1-6, **characterized in that** the dynamic pressure component (D_{D}) of the leakage gas is measured in a plurality of chamber rings (12a), and that the state of the sealing element (12b) located in the respective chamber ring (12a) is determined on the basis of the maximum amplitude (Dₘₐₓ) measured in the individual chamber rings (12a).

8. The method according to claim 7 , **characterized in that** a maximum amplitude (Dₘₐₓ₁, Dₘₐₓ₂, Dₘₐₓ₃) of the dynamic pressure components (D_{D}) present in the respective chamber ring (12a) increases from the inlet side (E ) towards the outlet side (A) with increasing operating time of the piston rod sealing system (12), and **in that** the state of the sealing elements (12b) located in these chamber rings (12a) is determined from the difference in the maximum amplitude (Dₘₐₓ₁, Dₘₐₓ₂, Dₘₐₓ₃) of two adjacent chamber rings (12).

9. The method according to one of the preceding claims, **characterized in that** a change in the dynamic pressure component (D_{D}) is monitored for a period of at least 2000 hours and preferably for at least 8000 hours.

10. The method according to one of the preceding claims, **characterized in that** a temperature (T) is measured in the piston rod sealing system (12) at least at one point, in particular the temperature of the piston rod (16).

11. A reciprocating compressor (1) with a monitoring system, wherein the piston compressor (1) comprises a piston (3) and a compression chamber (6, 7), wherein a gas can be compressed by means of the piston (3) in the compression chamber (6, 7) from a suction pressure (D_{A}) to a discharge pressure (D_{E}), wherein the reciprocating compressor (1) furthermore comprises a piston rod sealing system (12) which comprises at least two chamber rings (12a) arranged one after the other in a longitudinal direction (L), each with at least one sealing element (12b) arranged therein, wherein a piston rod (16) which is movable back and forth in the longitudinal direction (L) by means of a a crank (20) being provided on a drive shaft (21) extends through the sealing elements (12b) as well as the chamber rings (12a), wherein the piston rod (16) is connected to the piston (3), wherein the piston rod sealing system (12) has an inlet side (E ) and an outlet side (A), the pressure of the compression chamber (6, 7) being applied to the inlet side (E), **characterized in that** at least one pressure sensor (26, 26a) for measuring at least the dynamic pressure component (D_{D}) of a leakage gas located in the chamber rings (12a) is provided, and wherein a storage and evaluation unit (22) stores a plurality of measured dynamic pressure components (D_{D}), and wherein the evaluation unit (22) monitors a change in the dynamic pressure component (D_{D}) as a function of time and derives therefrom a change in state of at least one of the sealing elements (12b).

12. The reciprocating compressor with monitoring system according to claim 11, **characterized in that** said monitoring system determines the dynamic pressure component (D_{D}) as the difference between the differential pressure (D_{K}) and the static pressure component (D_{S}).

13. The reciprocating compressor with monitoring system according to claim 11 or 12, **characterized in that** the sealing elements (12b) are designed as friction rings resting against the piston rod (16), and **in that** a pressure sensor (26) is arranged at least at the chamber ring (12a) arranged closest to the outlet side (A) for measuring at least the dynamic pressure component (D_{D}) of a leakage gas located in the chamber ring (12a).

14. The reciprocating compressor with monitoring system according to one of the claims 11 or 13, **characterized in that** in the running direction (L) of the piston rod (16), starting from the inlet side (E ), sealing elements (12b) designed as pressure breaker rings (2i) are arranged first, and **in that** sealing elements (12b) designed as friction rings are arranged subsequently towards the outlet side (A), and **in that** in the longitudinal direction (L) at least one pressure sensor (26) is arranged between the pressure breaker rings (12i) and the sealing elements (12b) designed as friction rings.

## Revendications

1. Procédé de surveillance de l'état d'un système d'étanchéité de tige de piston (12) d'un compresseur à piston (1) comprenant une chambre de compression (6, 7), dans lequel, dans la chambre de compression (6, 7) du compresseur à piston (1), un gaz est comprimé d'une pression d'aspiration (D_{A}) à une pression finale (D_{E}), le système d'étanchéité de tige de piston (12) comprenant au moins deux anneaux de chambre (12a) disposées l'une derrière l'autre dans une direction longitudinale (L) et comportant chacune au moins un élément d'étanchéité (12b) disposé à l'intérieur, une tige de piston (16) traversant les éléments d'étanchéité (12b) ainsi que les anneaux de chambre (12a) est déplacée en va-et-vient dans la direction longitudinale (L) au moyen d'un vilebrequin (20) située sur un arbre d'entraînement (21) et est étanchée par les éléments d'étanchéité (12b), le système d'étanchéité de tige de piston (12) présentant un côté entrée (E) et un côté sortie (A), la pression de la chambre de compression (6, 7) s'appliquant au côté entrée (E) et une pression différentielle (D_{K}) se produit entre le côté entrée (E) et le côté sortie (A), la pression différentielle (D_{K}) produite présentant une composante de pression statique (D_{S}) et une composante de pression dynamique (D_{D}), la composante de pression dynamique (D_{D}) étant modifiée en fonction d'un angle de vilebrequin du vilebrequin (20), un gaz de fuite se trouvant dans les anneaux de chambre (12a), au moins la composante de pression dynamique (D_{D}) du gaz de fuite est mesurée dans le système d'étanchéité de tige de piston (12), et une modification de l'état d'au moins l'un des éléments d'étanchéité (12b) étant déterminée à partir d'une modification de la composante de pression dynamique (D_{D} ) en fonction du temps.

2. Procédé selon la revendication 1, **caractérisé en ce que** la composante de pression statique (D_{S}) correspond à la pression d'aspiration (D_{A}) et **en ce que** la composante de pression dynamique (D_{D}) est déterminée comme étant la différence entre la pression différentielle (D_{K}) et la composante de pression statique (D_{S}).

3. Procédé selon la revendication 1 ou 2, **caractérisé en ce que** l'élément d'étanchéité (12b) est étanche au gaz, en formant un anneau d'étanchéité par frottement (12e) qui s'appuie contre la tige de piston (16), l'anneau d'étanchéité par frottement (12e) s'usant sous l'effet du frottement entre l'anneau d'étanchéité par frottement (12e) et la tige de piston (16).

4. Procédé selon les revendications 1, 2 ou 3, **caractérisé en ce que** l'élément d'étanchéité (12b) comprend au moins une anneau de rupture de pression (12i) qui n'est pas complètement étanche.

5. Procédé selon l'une des revendications 3 ou 4, **caractérisé en ce que** la composante de pression dynamique (D_{D}) du gaz de fuite est mesurée au moins au niveau de l'anneau de chambre (12a) qui est la plus éloignée dans le sens longitudinal (L) du côté d'entrée (E).

6. Procédé selon l'une des revendications 4 ou 5, **caractérisé en ce que** le système d'étanchéité de tige de piston (12) comprend, à partir du côté entrée (E ) dans la direction longitudinale (L), une pluralité d'anneaux de chambre (12a) avec des anneaux de rupture de pression (12i) disposés à l'intérieur et, ensuite, d'une pluralité d'anneaux de chambre (12a) avec des bagues d'étanchéité par friction (12e) disposées à l'intérieur, et **en ce que** la composante de pression dynamique (D_{D}) du gaz de fuite est mesurée dans le dernier anneau de chambre (12a) avec d'anneau de rupture de pression (12i) disposée à l'intérieur ou dans le premier anneau de chambre (12a) avec l'anneau d'étanchéité à friction (12e) disposée à l'intérieur.

7. Procédé selon l'une des revendications 1 à 6, **caractérisé en ce que** la composante de pression dynamique (D_{D}) du gaz de fuite est mesurée dans une pluralité d'anneaux de chambre (12a), et **en ce que** l'état de l'élément d'étanchéité (12b) situé dans l'anneau de chambre (12a) respectif est déterminé à l'aide de l'amplitude maximale (Dₘₐₓ) mesurée dans les différents anneaux de chambre (12a).

8. Procédé selon la revendication 7, **caractérisé en ce qu'**une amplitude maximale (Dmax1, Dmax2, Dmax3) des composantes de pression dynamique (D_{D}) agissant dans l'anneau de chambre respectif (12a) augmente avec l'augmentation de la durée de fonctionnement du système d'étanchéité de tige de piston (12) du côté entrée (E ) vers le côté sortie (A), et **en ce que** la différence entre l'amplitude maximale (Dₘₐₓ₁, Dₘₐₓ₂, Dₘₐₓ₃) de deux anneaux de chambre adjacents (12) l'état des éléments d'étanchéité (12b) se trouvant dans ces anneaux de chambre (12a) est déterminé.

9. Procédé selon l'une des revendications précédentes, **caractérisé en ce qu'**une variation de la composante de pression dynamique (D_{D}) est surveillée pendant une durée d'au moins 2000 heures et de préférence pendant au moins 8000 heures.

10. Procédé selon l'une des revendications précédentes, **caractérisé en ce qu'**une température (T) est mesurée dans le système d'étanchéité de tige de piston (12) au moins en un point, en particulier la température de la tige de piston (16).

11. Compresseur à piston (1) avec un système de surveillance, le compresseur à piston (1) comprenant un piston (3) ainsi qu'une chambre de compression (6, 7), un gaz pouvant être comprimé d'une pression d'aspiration (D_{A}) à une pression finale (D_{E}) au moyen du piston (3) dans la chambre de compression (6, 7), le compresseur à piston (1) comprenant en outre un système d'étanchéité de tige de piston (12) qui comprend au moins deux anneaux de chambre (12a) disposées l'une derrière l'autre dans une direction longitudinale (L) et comportant chacune au moins un élément d'étanchéité (12b) disposé à l'intérieur, une tige de piston (16) mobile en va-et-vient dans la direction longitudinale (L) au moyen d'un vilebrequin (20) situé sur un arbre d'entraînement (21) traverse les éléments d'étanchéité (12b) et les anneaux de chambre (12a), la tige de piston (16) étant reliée au piston (3) , le système d'étanchéité de tige de piston (12) présentant un côté entrée (E ) et un côté sortie (A), la pression de la chambre de compression (6, 7) s'appliquant sur le côté entrée (E), **caractérisé en ce qu'**au moins un capteur de pression (26, 26a) est prévu pour mesurer au moins la composante de pression dynamique (D_{D}) d'un gaz de fuite qui se trouvant dans les anneaux de chambre (12a), et dans lequel un dispositif de mémorisation et d'évaluation (22) mémorise une pluralité de composantes de pression dynamique (D_{D}) mesurées, et dans lequel le dispositif d'évaluation (22) surveille une variation de la composante de pression dynamique (D_{D}) en fonction du temps et en déduit un changement d'état d'au moins l'un des éléments d'étanchéité (12b).

12. Compresseur à piston avec système de surveillance selon la revendication 11, **caractérisé en ce qu'**il détermine la composante de pression dynamique (D_{D}) comme étant la différence entre la pression différentielle (D_{K}) et la composante de pression statique (D_{S}).

13. Compresseur à piston avec système de surveillance selon la revendication 11 ou 12, **caractérisé en ce que** les éléments d'étanchéité (12b) sont conçus comme des anneaux de friction s'appuyant contre la tige de piston (16), et **en ce qu'**au moins sur l'anneau de chambre (12a) située le plus près du côté sortie (A) est disposé un capteur de pression (26) pour mesurer au moins la composante de pression dynamique (D_{D}) d'un gaz de fuite se trouvant dans l'anneau de chambre (12a).

14. Compresseur à piston avec système de surveillance selon l'une des revendications 11 ou 13, **caractérisé en ce que**, dans la direction longitudinal (L) de la tige de piston (16), à partir du côté entrée (E), des éléments d'étanchéité (12b) conçus d'abord comme des anneaux de rupture de pression (12i) sont disposés, et **en ce que** des éléments d'étanchéité (12b) conçus comme des anneaux de friction sont disposés ensuite vers le côté de sortie (A), et **en ce qu'**au moins un capteur de pression (26) est disposé dans la direction longitudinale (L) entre les anneaux de rupture de pression (12i) et les éléments d'étanchéité (12b) conçus comme des anneaux de friction.
